**Europäisches Patentamt**

**European Patent Office**

**Office européen des brevets**

(19)

(11) Veröffentlichungsnummer: **0 326 666 B1**

(12)

# EUROPÄISCHE PATENTSCHRIFT

(45) Veröffentlichungstag der Patentschrift:
18.09.91 Patentblatt 91/38

(51) Int. Cl.⁵: **B60P 7/10**

(21) Anmeldenummer: **88119421.1**

(22) Anmeldetag: **22.11.88**

(54) **Fahrzeug.**

(30) Priorität: **03.02.88 DE 8801330 U**

(43) Veröffentlichungstag der Anmeldung:
**09.08.89 Patentblatt 89/32**

(45) Bekanntmachung des Hinweises auf die
Patenterteilung:
**18.09.91 Patentblatt 91/38**

(84) Benannte Vertragsstaaten:
**AT BE CH DE ES FR GB GR IT LI LU NL SE**

(56) Entgegenhaltungen:
**DE-A- 2 933 970**
**DE-B- 1 223 763**
**US-A- 4 676 705**

(73) Patentinhaber: **EDELHOFF POLYTECHNIK GMBH & CO.**
**Heckenkamp 31**
**W-5860 Iserlohn 5 (DE)**

(72) Erfinder: **Brosch, Wilfried**
**Bochumer Strasse 149**
**W-4690 Herne 1 (DE)**

(74) Vertreter: **Lorenz, Eduard**
**Lorenz-Seidler-Gossel et al**
**Widenmayerstrasse 23**
**W-8000 München 22 (DE)**

EP 0 326 666 B1

## Beschreibung

Die Erfindung betrifft ein Fahrzeug gemäß dem Oberbegriff von Patentanspruch 1.

Der Transport von gefährlichen und/oder umweltgefährdenden Stoffen und Abfallstoffen erfolgt in vielfältigen Arten von Behältern wie kubischen Tankcontainern, Tanks und Aufsetztanks mit unterschiedlichen Verkehrsmitteln. Die Art der Behälter hängt dabei von der Größe, Menge und Art der zu transportierenden Stoffe und den gesetzlichen Vorschriften für den Transport solcher Stoffe ab. Ferner bestehen für Tanks, Tankcontainer und Aufsetztanks, deren Größe und Fassungsvermögen im wesentlichen durch das Platzangebot und die Tragfähigkeit des Transportfahrzeuges begrenzt sind, feste Vorschriften über die Befestigung der Behältnisse auf dem Fahrzeug.

Diese Befestigungsvorschriften berücksichtigen die beim Transport, z.B. auf der Straße, auftretenden Kräfte sowohl vertikal auf- als auch abwärts und horizontal vorwärts und seitwärts. Dies fordert eine Ausbildung der Halterungen zum Aufnehmen der Kräfte von den Behältern und deren Einleitung in den Rahmen des Fahrzeugs für Belastungen in Größenordnungen von eins bis zwei g.

Für Behälter gleicher Abmessungen und Bodengruppen ist ein Fahrzeug mit Halterungen bekannt (DE-A 2933970), wobei für jeden Behälter ein Aufstellrechteck durch am Fahrzeugboden angeordnete Winkel für die vier Ecken vorgesehen ist, das hakenförmige Niederhalter aufweist, die über die Rahmen der Bodengruppe jedes Behälters schwenkbar sind.

Ferner ist aus der DE-B 1223763 eine seitlich über Behälter-Bodenbeschläge verlagerbare Halteleiste zum Festhalten der Behälter auf der Ladefläche eines Fahrzeuges und aus der US-A 4676705 die Verwendung von aus der Ladefläche ausfahrbaren Halteklauen bekannt, die Rahmenholme von Ladeplatten übergreifen.

Aufgabe der Erfindung ist es, eine einfache, robuste und störungssichere Halterungskombination zu schaffen, die für Behälter unterschiedlicher Grundflächenabmessungen und ohne Rücksicht auf bestimmte Bodengruppenausbildungen, Beschläge, Einhakpunkte oder dgl. am Behälter anwendbar ist. Zweckmäßig sollen dabei die Folgen von Witterungseinflüssen während des Transportes (Niederschlagswasser) und Störfällen (Undichtheit eines Behälters) beherrschbar sein.

Die Aufgabe wird erfindungsgemäß durch die Merkmale des Anspruches 1 gelöst.

Das T-artige Profil übergreift den Randbereich der Bodengruppe des Behälters und nimmt einen Teil der unter Transportbedingungen auftretenden Kräfte in Richtung vertikal-aufwärts und die Kräfte in einer Richtung horizontal-seitwärts auf. Die zum Fahrzeugrand hin horizontal-seitwärts gerichteten Kräfte übernimmt das bodennahe Randprofil. Die schwierige Beherrschung der vertikal-aufwärts gerichteten Kräfte wird durch die an hochschwenkbaren Seitenwänden, Bracken genannt, angeordneten Längsprofile ermöglicht. Sie gelangen beim Hochklappen der Bracken zwangsweise in ihre Niederhaltestellung. Da sich das Profil über die ganze Seitenlänge, bei Unterteilung über die einzelnen Behälterlängen, erstreckt, verläuft die Belastungsaufnahme vorteilhaft linienförmig oder flächenförmig. Der Schwenkbereich der Bracken liegt etwa in der jeweiligen Ebene des Kräfteangriffs, so daß keine oder kaum Seitenkräfte oder Momente auftreten und die üblichen Brackenverriegelungen zur Sicherung ausreichen.

Die Sperrstange übernimmt die Absicherung der Ladung nach rückwärts. Sofern mit nur teilweiser Ausnutzung der Ladefläche gerechnet wird, ist es lediglich erforderlich dafür in Längsrichtung des Fahrzeuges mehrere Befestigungsmöglichkeiten im Abstand voneinander vorzusehen.

Auch ein bereits im Betrieb befindliches normales Ladefahrzeug läßt sich unschwer erfindungsgemäß umrüsten.

Vorteilhafte Weiterbildungen gehen aus den Unteransprüchen hervor.

Ausführungsformen des Erfindungsgegenstandes werden anhand der Zeichnungen beschrieben. Es zeigen :

| | |
|---|---|
| Fig. 1 | einen auf einem mit einem Rahmenausschnitt angedeuteten Fahrzeug gehalterten Behälter, |
| Fig. 2 | eine Seitenansicht auf einen Profilabschnitt, |
| Fig. 3 | einen Schnitt durch das Profil, |
| Fig. 4. | eine Seitenansicht eines Profilabschnitts anderer Ausführungsform, |
| Fig 5. | hierzu einen Schnitt, |
| Fig 6. | schematisiert und im Schnitt einen Teil eines Längsrandbereiches des Fahrzeuges, |
| Fig. 7 | einen entsprechenden Bereich anderer Ausführungsform, im Schnitt, |
| Fig. 8 | eine weitere Ausführungsform, im Schnitt, |
| Fig. 9 | einen Teilbereich einer Fahrzeug-Seitenwand (Bracke) im Schnitt, |
| Fig. 10 | eine andere Ausführungsform dieses Bereiches, |
| Fig. 11 | eine weitere Ausführungsform dieses Bereiches, |
| Fig. 12 | eine weitere Ausführungsform, |

Fig. 12a     eine Seitenansicht hierzu,

Fig. 13     eine Ansicht der Halterung einer Sperrstange am T-artigen Profil und am Ladeflächenboden,

Fig. 14     eine Draufsicht hierzu,

Fig. 15     eine andere Ausführungsform der Sperrstangenhalterung,

Fig. 16     eine Draufsicht hierzug,

Fig. 17     eine weitere Ausführungsform der Sperrstangenhalterung,

Fig. 18     eine Draufsicht hierzu,

Fig. 19     eine weitere Ausführungsform der Sperrstangenhalterung,

Fig. 20     eine Draufsicht hierzu,

Fig. 21     eine Ansicht einer Sperrstangenhalterung im Bereich des äußeren Fahrzeuglängsrandes, in Fahrtrichtung gesehen,

Fig. 22     eine zugehörige Ansicht vom Fahrzeuginneren her,

Fig. 23     den Bereich wie in Fig. 21 mit einer anderen Ausführungsform der Sperrstangenhalterung,

Fig. 24     eine Ansicht vom Fahrzeuginneren,

Fig. 25     eine weitere Ausführungsform der Sperrstangenhalterung,

Fig. 26     eine Ansicht vom Fahrzeuginneren her,

Fig. 27     eine Draufsicht hierzu,

Fig. 28     eine Seitenansicht des T-artigen Profils für besondere Behälterformen, und

Fig. 29     eine schematisierte Seitenansicht des Ladeflächenbodens mit Querträgern.

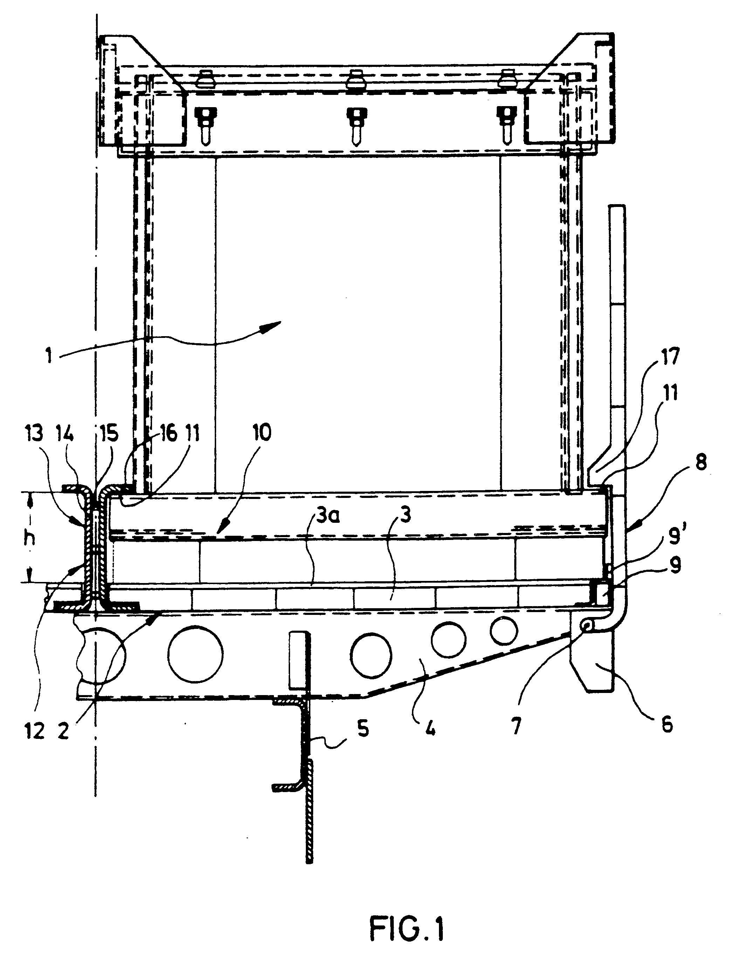

Fig. 1 stellt, leicht schematisiert, die Befestigung eines Behälters 1 auf einem Fahrzeug dar, in Fahrtrichtung von hinten gesehen. Das Fahrzeug ist angedeutet durch die in Fahrtrichtung rechte Hälfte seiner Ladefläche 2 mit einem Ladeflächenboden 3. Dieser ist mit einer Verschleißplatte 3a belegt. Vom Fahrzeugrahmen sind ein Querträger 4, ein Längsträger 5 und ein Seitenstück 6 angedeutet. Am Seitenstück 6 ist in einem Schwenklager 7 eine hochklappbare Seitenwand 8, Bracke genannt, befestigt. Mit dem Fahrzeugrahmen ist ferner ein an der Längsseite neben dem Boden 3 verlaufendes und diesen teilweise überragendes Randprofil 9 verbunden.

Der im wesentlichen rechteckige oder kubische Behälter 1 weist eine Bodengruppe 10 mit über den eigentlichen Behälterumriß überstehenden Rändern 11 auf.

Der Fahrzeugrahmen trägt auf den Querträgersn 4 ein T-artiges Profil 12, das mittig zwischen den Seitenrändern und parallel zu diesen, in Fahrzeuglängsrichtung verläuft. Es besteht aus zwei U-Profilen 13, deren einander mit kleinem Abstand zugewandte Mittelstege 14 durch leiterartige Zwischenstege 15 miteinander verbunden sind. Das Profil 12 durchsetzt den Ladeflächenboden 3 und greift mit seinen U-Schenkeln unter diesen. Das Profil 12 kann auch auf dem durchgehenden Ladeflächenboden 3 oder seine durchgehende Oberfläche aufgesetzt oder darin eingelassen sein. Andere, nicht gezeigte Befestigungsmittel können zum Befestigen des Profils 12 am Fahrzeugrahmen bzw. -boden benutzt werden. Oberhalb des Bodens 3 verbleibt somit ein T-artiges Profil mit sich in Längsrichtung beidseitig erstreckenden Stegen 16. Der Abstand h über dem Boden 3 ist so bemessen, daß er das Unterschieben der Bodengruppen 10 der Behälters 1 mit dem Rand 11 mit kleinem Spiel ermöglicht.

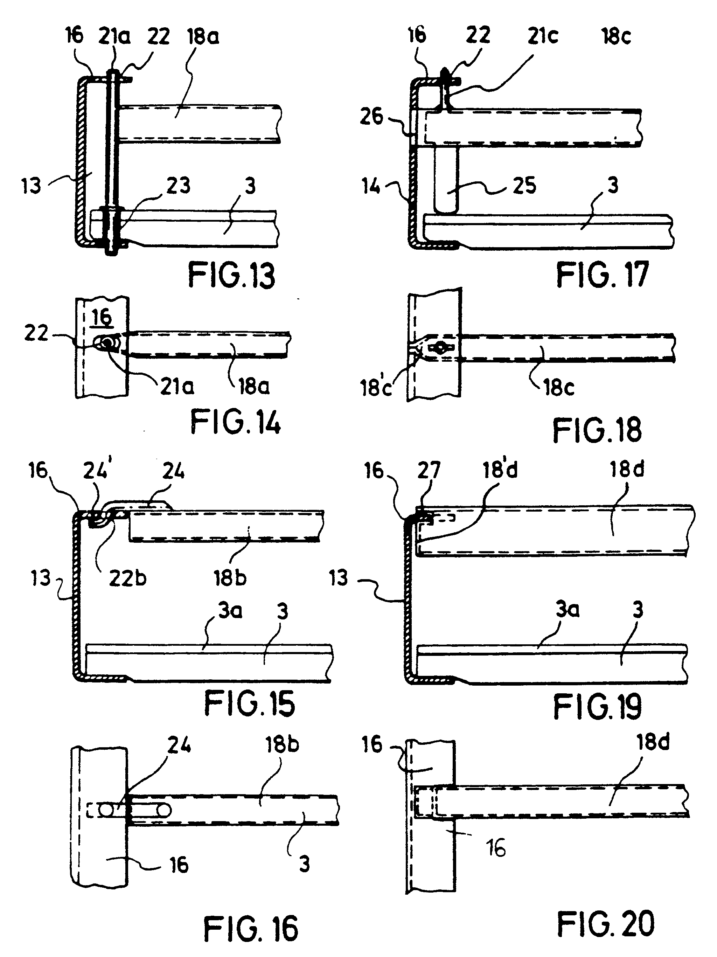

Das T-artige Profil 12 begrenzt horizontale Bewegungen des Behälters nach links, sowie Vertikalbewegungen nach oben, und nimmt beim Transport in diese Richtungen auftretende Kräfte auf bzw. leitet sie in den Fahrzeugrahmen. Horizontale Bewegungen nach rechts, d.h. zur äußeren Längsseite des Fahrzeuges verhindert das Randprofil 9 mit seinem über den Boden 3 hochstehenden Ansatz 9'. Die vertikal-aufwärts gerichteten Bewegungen bzw. Kräfte beherrscht ein an der Bracke 8 angeordnetes Längsprofil 17, das bei hochgeschwenkter Bracke 8 wie ein Niederhalter den Rand 11 übergreift. Der auf diese Weise sicher auf der Ladefläche gehaltene Behälter kann zusätzlich nach hinten durch eine in Fig. 1 nicht gezeigte Sperrstange 18 gesichert werden, wie sie aus den Fig. 13 bis 27 hervorgeht.

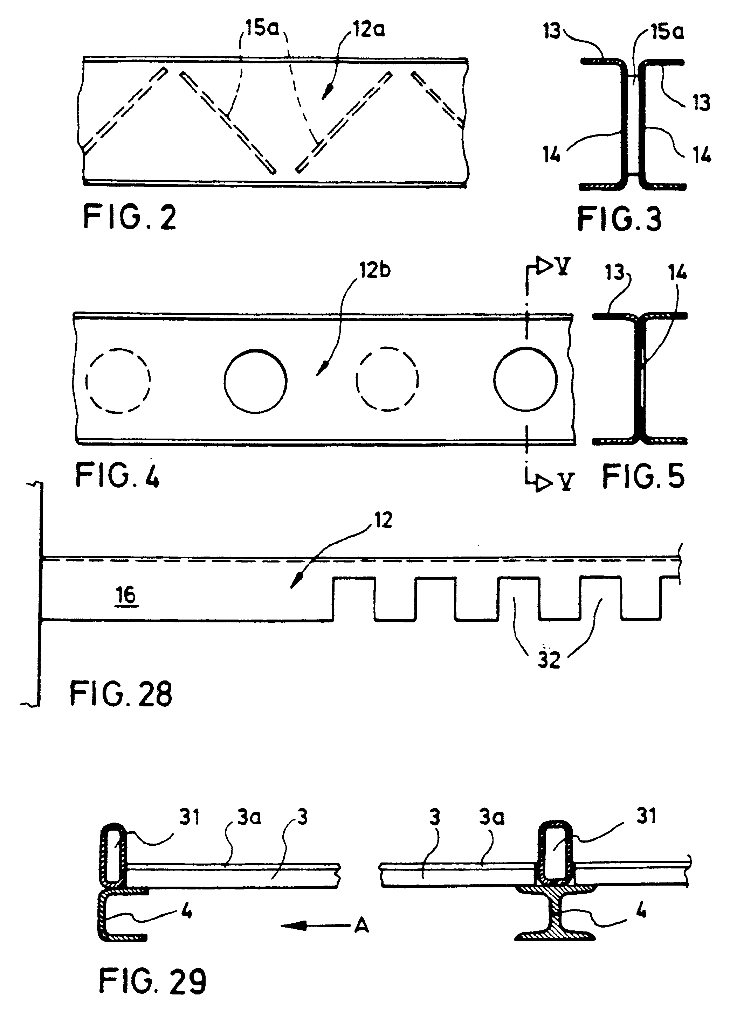

Im folgenden werden Ausführungsformen der bereits aufgeführten Halterungsorgane beschrieben, wobei zur Klarstellung die gleichen Bezugszeichen, nur mit Buchstabenzusatz, verwendet werden. Fig. 2 und 3 zeigen ein T-ar- tiges Profil 12a, bestehend aus zwei U-Profilen 13, verbunden durch schräg zwischen die Mittelstege 14 geschweißte Zwischenstege 15a.

Bei dem in den Fig. 4 und 5 dargestellten T-artigen Profil 12b sind die U-Profile 13 mit ihren Mittelstegen 14 aneinanderliegend durch wechselseitige Lochschweißung verbunden.

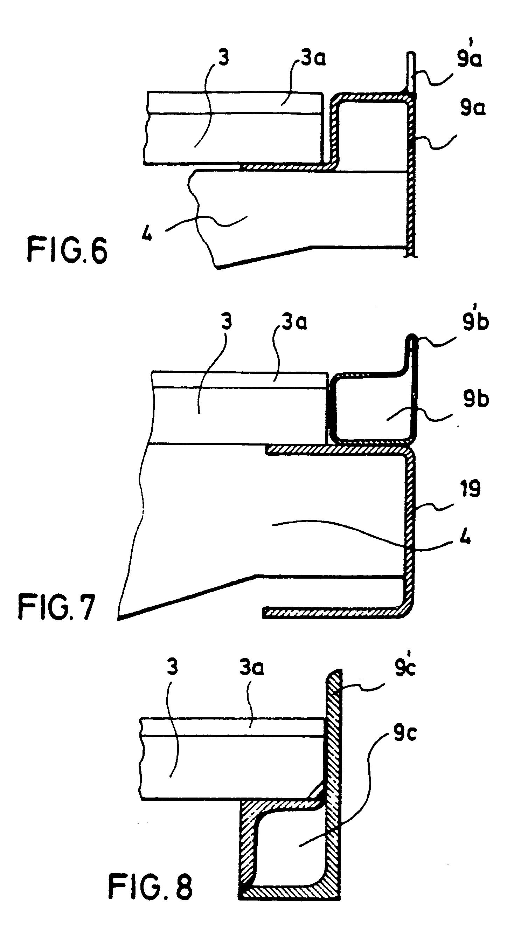

Die Fig. 6 bis 8 zeigen Ausführungsformen der Randprofile 9. In Fig. 6 besteht das Randprofil 9a aus einem mehrfach abgewinkelten Flacheisen, angeschweißt am Querträger 4, und unter Bildung eines U-Bogens unter den Boden 3 greifend. Der Ansatz 9'a ist gesondert angeschweißt. Fig. 7 zeigt das Randprofil 9b ausgebildet als Strangpreßprofil mit einstückig angeformtem Ansatz 9'b. Gehaltert ist es am Querträger 4 mittels eines U-förmigen Normprofils 19. Das in Fig. 8 gezeigte Randprofil 9c besteht aus zwei L-Profilen, die unter dem Boden 3 ein etwa quadratisches Hohlprofil bilden, wobei der verlängerte L-Schenkel des einen Profiles zur Bildung des Ansatzes 9'c über den Boden nach oben ragt.

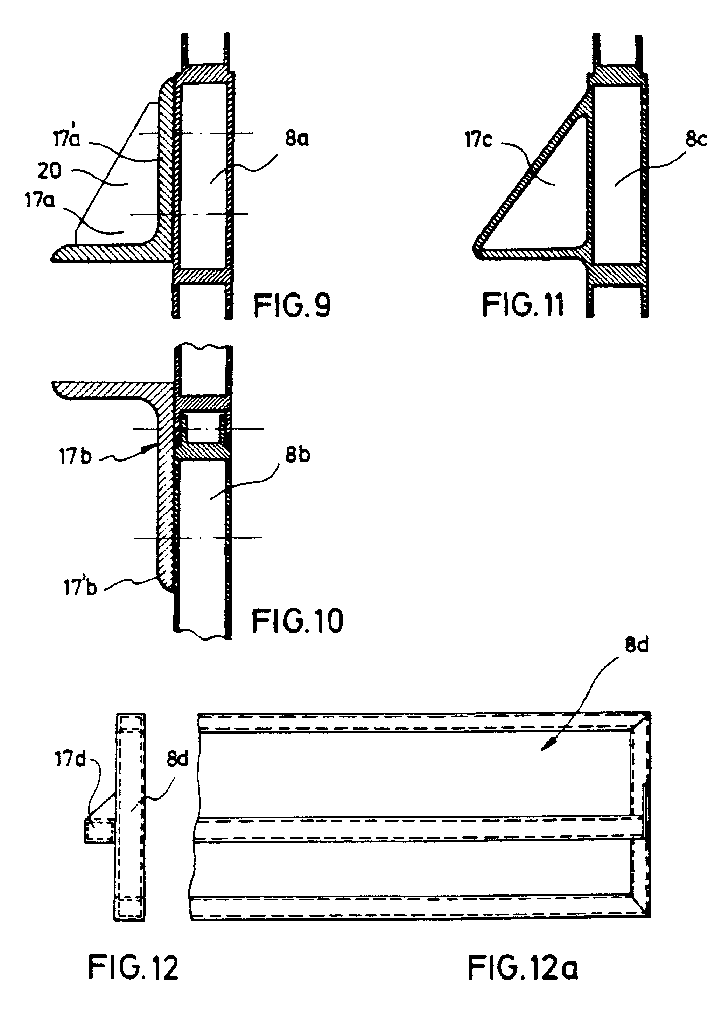

Die Fig. 9 bis 12a zeigen Ausführungsformen eines Teiles der Bracke 8 mit daran angeordnetem Längsprofil 17. In Fig. 9 besteht der das Längsprofil 17a tragende Teil der Bracke 8a aus einem Aluminiumhohlprofil. Das Längsprofil 17a ist ein L-Profil, das mit seinem langen Schenkel 17'a nach oben gerichtet an der Bracke festgeschraubt ist. Zusätzlich sind Versteifungslaschen 20 mit den Schenkeln verbunden. Das Längsprofil 17b nach Fig. 10 ist ebenfalls L-förmig, jedoch mit seinem längeren Schenkel 17'b nach unten gerichtet an der Bracke 8b gehaltert, wobei es eine Stoßstelle zwischen zwei hier zusammengesteckten Hohlprofilen der Bracke verbindet. In Fig. 11 ist das Längsprofil 17c in Dreiecksform einstückig mit einem Hohlprofilabschnitt der Bracke 8c als Alumunium-Strang- preßprofil ausgeformt.

Eine spezielle Ausführung der Bracke 8d als offenes Rohrgestell zeigt Fig. 12a in Seitenansicht. Das Längsprofil 17d weist das gleiche Kastenprofil wie die übrigen Bestandteile der Bracke auf.

Wie erwähnt, ist zur Sicherung der Behälter zur Fahrzeugrückseite hin eine einsetzbare Sperrstange 18 als zusätzliches Halterungselement vorgesehen. Die Fig. 13 bis 20 zeigen Ausführungsformen der, z.B., als hohles Kastenprofil ausgebildeten Sperrstange 8 und ihre Verbindung mit dem T-artigen Profil 12. In Fig. 13 ist am Ende der Sperrstange 18a ein Sicherungsbolzen 21a angebracht. Der Boden 3 und die Stege 16 des hier nur durch ein U-Profil 13 angedeuteten Profils 12 weisen fluchtende Ausnehmungen 22 bzw. 23 auf, in die der Bolzen 21a eingreift.

Fig. 15 und 16 zeigen eine Ausführungsform, bei der die Sperrstange 18b an ihrer Oberseite mit einer abgewinkelten Befestigungslasche 24 verbunden ist, deren überstehendes, abgebogenes Ende 24' in eine Ausnehmung 22b des Steges 16 des U-Profils 13 eingeschoben ist.

Die Sperrstange 18c (Fig. 17 und 18) trägt an ihrem Ende auf der Oberseite einen angeschweißten Sicherungsbolzen 21c, der eine Ausnehmung 22 im Schenkel 16 durchsetzt, während sich die Sperrstange 18c auf dem Boden 3 mittels eines Distanzstückes 25 abstützt. Zusätzlich ist das Ende der Sperrstange 18c zu einer Nase 18'c verformt, die in eine Ausnehmung 26 des Mittelschenkels 14 des U-Profils eingreift.

Gemäß Fig. 19 und 20 geht eine Ausführungsform der Sperrstange 18b hervor, deren Ende eine Abschlußwand 18'd mit einem Schlitz 27 aufweist, mit welchem sie auf den Schenkel 16 des U-Profils 13 aufgeschosten ist, der eine das Ende umgreifende Aussparung 16' aufweist, so daß das eingesteckte Ende gesichert wird.

Hier soll, um Mißverständnisse zu vermeiden, darauf hingewiesen werden, daß in den Fig. 13 bis 20 das T-artige Profil 12 der Einfachheit halber jeweils nur durch einen Teil, nämlich eines der zu diesem Profil zu verbindenden U-Profile dargestellt ist. Alle gezeigten Verbindungen sind auch mit einem einstückigen T- bzw. Doppel-T-Profil möglich.

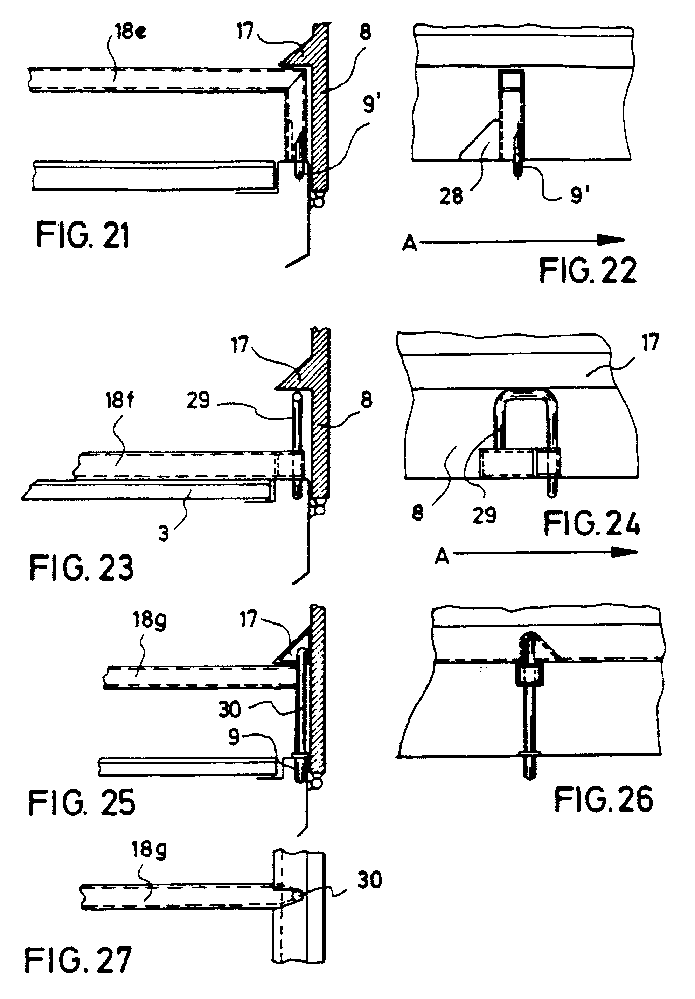

Ausführungsformen für das andere an der Fahrzeuglängsseite zu halternde Ende der Sperrstange 18 stellen die Fig. 21 bis 27 vor. Bei der Ausführungsform nach den Fig. 21 und 22 ist das Kastenprofil der Sperrstange 18e rechtwinklig abgebogen. Die Abbiegung ist offen und auf den Ansatz 9' des Randprofils gesetzt. Die Länge der Abbiegung ist so bemessen, daß das Längsprofil 17 der Bracke 8 in Transportstellung, also hochgeschwenkt, für dieses Ende der Sperrstange 18e als Niederhalter dient und damit den sicheren Sitz gewährleistet. Zusätzlich sorgt eine Dreieckslasche 28 an der Abbiegung für eine Abstützung auf dem Randprofil 9. Bei der Ausführungsform nach Fig. 23 ist vorgesehen, die Sperrstange 18f direkt auf den Boden aufzulegen. Sie ist an ihrem Ende rechtwinklig abgebogen, wobei der abgebogene Schenkel auf dem Randprofil 9 aufliegt und einen bügelförmigen Sicherungsbolzen 29 trägt, dessen freies, nach unten durchgeführtes Ende in das Randprofil 9 eingreift und oben vom Längsprofil 17 der Bracke 8 übergriffen wird.

Die Fig. 25 bis 27 zeigen ein Ende der Sperrstange 18g, das im wesentlichen mit dem in den Fig. 13 und 14 gezeigten anderen Ende der Sperrstange 18a übereinstimmt. Ein an der Sperrstange 18g fest angeordneter Sicherungsbolzen 30 greift einerseits nach unten in das Randprofil 9, andererseits nach oben in das Längsprofil 17.

Alle am T-artigen Profil 12, am Bracken-Längsprofil 17, am Boden 3 und am Randprofil 9 vorzusehenden Ausnehmungen für die Befestigung der Sperrstangen sind in Längsabständen voneinander angeordnet derart, daß eine oder mehrere Sperrstangen wahlweise am hinteren Ende der Ladefläche, bei geringerer Beladung aber auch hinter einem oder zwei Behältern — in Längsrichtung — weiter vorne befestigt werden können. Sofern die Behälterabmessungen und die Art ihrer Aufstellung es erlaubt, können Sperrstangen auch zwischen jeweils zwei Behältern eingesetzt werden und so die Belastungen in Fahrtrichtung aufgeteilt aufnehmen.

Weitere Möglichkeiten, die Bewegung der Behälter in Längsrichtung des Fahrzeuges zu begrenzen, besteht in der Anordnung von Widerlagern im Ladeflächenboden. Gemäß Fig. 29 sind zwei Rechteck-Hohlprofile hochkant als Querstreben 31 so in den Boden 3 eingefügt, daß sie Bewegungen der Behälter in Fahrtrichtung A begrenzen. Vorzugsweise sind sie über Querträgern 4 des Fahrzeugrahmens gelagert. Solche Querstreben können auch in mit anderen Profilformen ausgebildet werden.

Fig. 28 zeigt noch eine spezielle Ausführungsform des T-artigen Profiles 12, und zwar eine Hälfte davon in Draufsicht auf den Steg 16. Dieser weist in Abständen Aussparungen 32 in Rechteckform auf, zur Außenkante hin offen. Diese ermöglichen die Verwendung des erfindungsgemäßen Fahrzeuges für Behälter mit Eckstreben, die sich über den Rändern 11 der Bodengruppen erstrecken. Die Längsprofile 17 an den Bracken sind für diesen Fall ebenfalls mit ähnlichen Aussparungen zu versehen.

Die Erfindung ist nicht auf die Ausführungsbeispiele beschränkt. Insbesondere können sowohl das T-artige Profil 12 als auch die Längsprofile 17 an der Bracke 8 in ihrem Gesamtumriß weitgehend variieren, sofern nur die unmittelbaren Auflage- bzw. Begrenzungsflächen vorhanden sind. Auch das Profil der Sperrstange sowie ihre Halterungsmöglichkeiten am Fahrzeug können in weitem Maße variieren.

Anstelle einer einzigen, mittig auf dem Fahrzeugboden in Längsrichtung verlaufenden T-artigen Profile 12 können für Behälter mit kleinen Abmessungen, von denen drei nebeneinander passen, auch zwei parallele T-artige Profile vorgesehen sein.

Eine Ausbildung der Ladefläche mit ihren Rändern als Auffangwanne zum Vermeiden von Verschmutzungen des Fahrzeugs und der Umwelt bei Transportgutverlusten, Leckagen oder witterungsbedingten Abwaschungen ist besonders wichtig. Dann ist ein Ableitsystem zu darunterliegenden Auffangbehältnissen vorgesehen, die sich leicht entsorgen lassen.


**Patentansprüche**

1. Fahrzeug zum Transport von Behältern (1), insbesondere Abfallsammelbehältern, wie kubischen Tankcontainern oder dgl., mit einem Ladeflächenboden (3) und Halterungen für die Behälter, **dadurch gekennzeichnet,** daß zum sicheren Haltern der Behälter (1) und zur Aufnahme der beim Transport zu erwartenden Kräfte und deren Weiterleiten in den Fahrzeugrahmen folgende Halterungen vorgesehen sind :
a) wenigstens ein in Fahrzeuglängsrichtung am Fahrzeugrahmen stehend angeordnetes T-artiges Profil (12) mit sich entlang seiner beiden Längskanten erstreckenden Stegen (16) in einem das Unterschieben von Rändern (11) der Bodengruppen (10) der Behälter (1) ermöglichenden Abstand (h) über dem Ladeflächenboden (3),
b) bodennahe Randprofile (9) an den Längsseiten des Ladeflächenbodens (3), und
c) hochschwenkbare Seitenwände, sogenannte Bracken (8), mit abstehenden Längsprofilen (17), die in Vertikalstellung der Bracken (8) die Ränder (11) der Behälter (1) als Niederhalter übergreifen.

2. Fahrzeug nach Anspruch 1, **gekennzeichnet durch** wenigstens eine in Fahrtrichtung (A) hinter dem Behälter oder den Behältern (1) quer zur Fahrtrichtung befestigbare Sperrstange (18) zur Verschiebesicherung in Fahrtrichtung.

3. Fahrzeug nach Anspruch 1, **dadurch gekennzeichnet,** daß das T-artige Profil (12) mittig, d.h. mit etwa gleichem Abstand zu beiden Längsseiten der Ladefläche (2) angeordnet ist.

4. Fahrzeug nach wenigstens einem der Ansprüche 1 bis 3, **gekennzeichnet durch,** ein einstückiges Metall-, vorzugsweise T-Eisenprofil (12).

5. Fahrzeug nach wenigstens einem der Ansprüche 1 bis 3, **gekennzeichnet durch,** ein einstückiges Metall-, vorzugsweise ein Doppel-T-Eisen-Profil (12).

6. Fahrzeug nach wenigstens einem der Ansprüche 1 bis 3, **dadurch gekennzeichnet,** daß das T-artige Profil (12) aus zwei verbundenen Metall-, Eisen-U-Profilen (13) gebildet ist.

7. Fahrzeug nach Anspruch 6, **dadurch gekennzeichnet,** daß die U-Profile (13) mit ihren Mittelstegen (14) aneinanderliegend verschweißt sind.

8. Fahrzeug nach Anspruch 6, **dadurch gekennzeichnet,** daß die U-Profile (13) mit einander zugekehrten Mittelstegen (14) im Abstand durch Zwischenstege (15) leiterartig verbunden sind.

9. Fahrzeug nach wenigstens einem der Ansprüche 1 bis 8, **dadurch gekennzeichnet,** daß das T-artige Profil (12) den Ladeflächenboden (3) durchdringt.

10. Fahrzeug nach wenigstens einem der Ansprüche 1 bis 8, **dadurch gekennzeichnet,** daß das T-artige Profil (12) in den Ladeflächenboden (3) einbezogen ist.

11. Fahrzeug nach Anspruch 1, **dadurch gekennzeichnet,** daß die Randprofile (9) auf den Außenrahmen des Fahrzeugs aufgesetzt sind.

12. Fahrzeug nach Anspruch 1, **dadurch gekennzeichnet,** daß die Randprofile (9) aus einer angearbeiteten Kante bestehen und sich auch entlang der Vorder- und Hinterränder des Ladeflächenbodens (3) erstrecken.

13. Fahrzeug nach Anspruch 1, **dadurch gekennzeichnet,** daß die Längsprofile (17a, 17b) an den Bracken (8, 8a, 8b) aus Winkeleisen bestehen.

14. Fahrzeug nach Anspruch 1, **dadurch gekennzeichnet,** daß die Längsprofile (17d) ein Kastenprofil aufweisen.

15. Fahrzeug nach Anspruch 1, **dadurch gekennzeichnet,** daß die Längsprofile (17c) ein Dreiecksprofil aufweisen.

16. Fahrzeug nach wenigstens einem der Ansprüche 1 bis 15, **dadurch gekennzeichnet**, daß die Bracken (8) in Längsrichtung mehrfach, vorzugsweise mit dem zu erwartenden Behältermaß-Raster, in Abschnitte unterteilt sind.

17. Fahrzeug nach wenigstens einem der Ansprüche 1 bis 16, **dadurch gekennzeichnet**, daß die Bracken (8) oder die Brackenabschnitte mit den Längsprofilen (17) einstückig aus einem stranggepreßten Profil bestehen.

18 Fahrzeug nach Anspruch 2, **dadurch gekennzeichnet**, daß die Sperrstange (18) einerseits am T-artigen Profil (12), andererseits am Fahrzeugrahmen befestigbar ist.

19. Fahrzeug nach Anspruch 18, **dadurch gekennzeichnet**, daß die Sperrstange (18) mittels des Bracken-Längsprofils (17) feststellbar ist.

20. Fahrzeug nach Anspruch 18, **dadurch gekennzeichnet**, daß das T-artige Profil (12) im Steg (16) Ausnehmungen (22) für einen Sicherungsbolzen (21) der Sperrstange (18) aufweist.

21. Fahrzeug nach Anspruch 18, **dadurch gekennzeichnet**, daß der Steg (16) des T-artigen Profils (12) Ausnehmungen (22b) für eine Befestigungslasche (24) an der Sperrstange (18) aufweist.

22. Fahrzeug nach Anspruch 18, **dadurch gekennzeichnet**, daß die Sperrstange (18) Ausnehmungen für das Durchführen eines Sicherungsbolzens (21) aufweist.

23. Fahrzeug nach Anspruch 18, **dadurch gekennzeichnet**, daß der Sicherungsbolzen (21) fest mit der Sperrstange (18) verbunden ist.

24. Fahrzeug nach Anspruch 21, **dadurch gekennzeichnet**, daß die Befestigungslasche (24) fest mit der Sperrstange (18) verbunden ist.

25. Fahrzeug nach Anspruch 18, **dadurch gekennzeichnet**, daß die Sperrstange (18) stirnseitig einen Schlitz (27) zum Aufschieben auf den Steg (16) des T-artigen Profils (12) aufweist.

26. Fahrzeug nach Anspruch 18, **dadurch gekennzeichnet**, daß der Fahrzeugrahmen im Außenrandbereich Ausnehmungen zum Einstecken eines Sicherungsbolzens (29, 30) für die Sperrstange (18) aufweist.

27. Fahrzeug nach Anspruch 26, **dadurch gekennzeichnet**, daß der Sicherungsbolzen (30) fest mit der Sperrstange (18) verbunden ist.

28. Fahrzeug nach Anspruch 18, **dadurch gekennzeichnet**, daß das Bracken-Längsprofil (17) das obere Ende des Sicherungsbolzens (30) aufnimmt.

29. Fahrzeug nach Anspruch 26, **dadurch gekennzeichnet**, daß der Sicherungsbolzen (29) auf der Sperrstange (18f) bügelförmig ist und seinen Mittelschenkel als Auflage für das Längsprofil (17) und einen verlängerten Schenkel zum Eingriff in den Fahrzeugrahmen aufweist.

30. Fahrzeug nach wenigstens einem der Ansprüche 26 bis 29, **dadurch gekennzeichnet**, daß das Bracken-Längsprofil (17) auf den Sicherungsbolzen (29) auflegbar ist.

31. Fahrzeug nach Anspruch 18, **dadurch gekennzeichnet**, daß die Sperrstange (18e) an ihrem äußeren Ende einen Winkel mit einem Schenkel bildet, dessen Höhe der Höhe des Bracken-Längsprofils (17) über dem Boden (3) in vertikaler Bracken-Stellung entspricht, und das am Schenkelende einer Öffnung zum Aufsetzen auf den Randprofilansatz (9') vorgesehen ist.

32. Fahrzeug nach wenigstens einem der Ansprüche 1 bis 31, **dadurch gekennzeichnet**, daß der Ladeflächenboden (3) als Verschiebesicherung in Fahrtrichtung Querstreben (31) trägt.

33. Fahrzeug nach wenigstens einem der Ansprüche 1 bis 32, **dadurch gekennzeichnet**, daß zusätzlich am Fahrzeugrahmen lose oder festgelegte Klammerelemente zur Einzelhalterung eines Behälters (1) anbringbar oder angebracht sind.

34. Fahrzeug nach Anspruch 1, **dadurch gekennzeichnet**, daß das T-artige Profil (12) und/oder die Bracken-Längsprofile (17) Aussparungen (32) für Behälter (1) mit Eckstreben aufweist.

35. Fahrzeug nach Anspruch 1, **dadurch gekennzeichnet**, daß der Ladeflächenboden (3) mit den Seitenrändern (9) und vorderen bzw. hinteren Rändern wannenartig ausgebildet ist, und daß beim Ladeflächenboden ein Ableitsystem mit Auffangbehältnissen für Leckagen bzw. Abwaschungen vorgesehen ist.

36. Fahrzeug nach Anspruch 35, **dadurch gekennzeichnet**, daß die seitlichen Bracken (8) sowie eine eventuelle Heckbracke im geschlossenen Zustand, mittels Dichtungen flüssigkeitsdicht am Ladeflächenboden bzw. an dessen Randelementen anliegen.

37. Fahrzeug nach den Ansprüchen 35 und 36, **dadurch gekennzeichnet**, daß daß der Boden (3) ein Flüssigkeitsablaufsystem aus einer oder mehreren Rinnen oder Senken oder Öffnungen besitzt, an die sich Rohrleitungen zur Ableitung von Flüssigkeit anschließen.

38. Fahrzeug nach Anspruch 37, **dadurch gekennzeichnet**, daß die Rohrleitungen in einem oder mehreren unterhalb der Ladefläche angebrachten Tanks enden.

39. Fahrzeug nach Anspruch 38, **dadurch gekennzeichnet**, daß die Tanks Entleerungseinrichtungen wie Ablaßstutzen oder Absaugesstutzen aufweisen.

EP 0 326 666 B1

## Claims

1. A vehicle for the carriage of containers (1), refuse containers in particular, such as cubic tank containers or the like, with a loading surface base (3) and mountings for the containers, **characterized in that** for the secure holding of the containers (1) and for the absorption of the forces to be expected during carriage and their transmission into the vehicle frame, provision is made for the following mountings :

a) at least one T-type section (12) arranged to be up-right on the vehicle frame in the longitudinal direction of the vehicle, with flanges (16) extending along its two longitudinal edges at a distance (h) above the loading surface base (3) permitting the sliding under of the edges (11) of the base parts (10) of the containers (1),

b) edge sections (9) near the bottom on the longitudinal sides of the loading surface base (3), and

c) side walls that can be swung up, so-called flaps (8), with projecting longitudinal sections (17) which, in the vertical position of the flaps (8), overlap the edges (11) of the containers (1) as holding down members.

2. A vehicle according to claim 1, **characterized by** at least one locking bar (18) which, viewed in the direction of travel (A) can be secured behind the container or containers (1) transversely to the direction of travel to prevent sliding in the direction of travel.

3. A vehicle according to claim 1, **characterized in that** the T-type section (12) is arranged centrally, that is to say, at approximately the same distance from the two longitudinal sides of the loading surface (2).

4. A vehicle according to at least one of claims 1 to 3, **characterized by** a one-piece metallic, preferably iron T-section (12).

5. A vehicle according to at least one of claims 1 to 3, **characterized by** a one-piece metallic, preferably a double T-iron profile (12).

6. A vehicle according to at least one of claims 1 to 3, **characterized in that** the T-type section (12) is formed by two joined metallic, iron channel sections (13).

7. A vehicle according to claim 6, **characterized in that** the channel sections (13) are welded together with their central webs (14) adjoining each other.

8. A vehicle according to claim 6, **characterized in that** the channel sections (13) are joined together at a distance, with their central webs (14) facing each other, by intermediate cross pieces (15) in the manner of a ladder.

9. A vehicle according to at least one of claims 1 to 8, **characterized in that** the T-type section (12) passes through the loading surface base (3).

10. A vehicle according to at least one of claims 1 to 8, **characterized in that** the T-type section (12) is incorporated in the loading surface bane (3).

11. A vehicle according to claim 1, **characterized in that** the edge sections (9) are mounted on the outer frame of the vehicle.

12. A vehicle according to claim 1, **characterized in that** the edge sections (9) consist of a worked-on edge and extend also along the front and rear edges of the loading surface base (3).

13. A vehicle according to claim 1, **characterized in that** the longitudinal sections (17a, 17b) on the flaps (8, 8a, 8b) consist of angle irons.

14. A vehicle according to claim 1, **characterized in that** the longitudinal sections (17d) have a box profile.

15. A vehicle according to claim 1, **characterized in that** the longitudinal sections (17c) have a triangular profile.

16. A vehicle according to at least one of claims 1 to 15, **characterized in that** the flaps (8) are subdivided into several sections, preferably together with the container measurement grid to be expected.

17. A vehicle according to at least one of claims 1 to 16 **characterized in that** the flaps (8), or the flap sections, consist, together with the longitudinal sections (17), of a one-piece extruded section.

18. A vehicle according to claim 2, **characterized in that** the locking bar (18) can, on the one hand, be fixed to the T-type section (12) and, on the other hand, to the vehicle frame.

19. A vehicle according to claim 18, **characterized in that** the locking bar (18) can be fixed in position by means of the longitudinal flap section (17).

20. A vehicle according to claim 18 **characterized in that** the T-type section (12) has recesses (22) in the flange (16) for a safety bolt (21) of the locking bar (18).

21. A vehicle according to claim 18, **characterized in that** the flange (16) of the T-type section (12) has recesses (22b) for a fixing strap (24) on the locking bar (18).

22. A vehicle according to claim 18, **characterized in that** the locking bar (18) has recesses for the passing of a safety bolt (21).

23. A vehicle according to claim 18, **characterized in that** the safety bolt (21) is fixedly joined to the locking bar (18).

7

24. A vehicle according to claim 21, **characterized in that** the fixing strap (24) is fixedly joined to the locking bar (18).

25. A vehicle according to claim 18, **characterized in that** the locking bar (18) has at its front, a slot (27) for fitting onto the flange (16) of the T-type section (12).

26. A vehicle according to claim 18, **characterized in that** the vehicle frame has in its outer edge zone recesses for the insertion of a safety bolt (29, 30) for the locking bar (18).

27. A vehicle according to claim 26, **characterized in that** the safety bolt (30) is fixedly joined to the locking bar (18).

28. A vehicle according to claim 18, **characterized in that** the longitudinal flap section (17) accommodates the upper end of the safety bolt (30).

29. A vehicle according to claim 26, **characterized in that** the safety bolt (29) on the locking bar (18f) is stirrup-shaped and has its central arm as a bearing member for the longitudinal section (17) and an extended arm for engagement in the vehicle frame.

30. A vehicle according to at least one of claims 26 to 29, **characterized in that** the longitudinal flap section (17) can be placed onto the safety bolt (29).

31. A vehicle according to claim 18, **characterized in that** the locking bar (18e) forms at its outer end an angle with an arm whole height corresponds to the height of the longitudinal flap section (17) above the base (3) in the vertical flap position, and in that at the end of the arm, provision is made for an opening for fitting onto the edge section extension (9').

32. A vehicle according to at least one of claims 1 to 31, **characterized in that** the loading surface base (3) has transverse struts (31) to prevent sliding in the direction of travel.

33. A vehicle according to at least one of claims 1 to 32, **characterized in that** in addition, loose or fixed clamping elements can be, or are, attached for the individual holding of a container (1).

34. A vehicle according to claim 1, **characterized in that** the T-type section (12) and/or the longitudinal flap sections (17) have recesses (32) for containers (1) with angle irons.

35. A vehicle according to claim 1, **characterized in that** the loading surface base (3) with the side edges (9) and front or rear edges has a pan-shaped design, and in that in the loading surface base, provision is made for a drainage system with sumps for leakages or ablutions.

36. A vehicle according to claim 35, **characterized in that** the lateral flaps (8), as well as an optional rear flap bear in their closed state on the loading surface base or on its edge elements in a liquid tight manner by means of gaskets.

37. A vehicle according to claims 35 and 36 **characterized in that** the base (3) has a liquid drainage system consisting of one or several gutters or depressions or openings, followed by pipes for the drainage of liquids.

38. A vehicle according to claim 37, **characterized in that** the pipes issue in one or several tanks fixed beneath the loading surface base.

39. A vehicle according to claim 38, characterized in that the tanks have drainage devices such as outlet connection pipes or extraction connection pipes.

## Revendications

1. Véhicule pour le transport de réservoirs (1), de réservoirs de déchets notamment, tels que des conteneurs cubiques ou analogues, comportant un plancher de plateau de chargement (3) et des fixations pour les réservoirs, caractérisé en ce que pour assurer le maintien des réservoirs (1) et pour absorber les forces à attendre lors du transport en les transmettant au châssis du véhicule, les fixations suivantes sont prévues :

a) au moins un profil en T (12) placé fixe sur le châssis du véhicule et dans la direction longitudinale de celui-ci, profil comportant des traverses (16) s'étendant le long de ses deux arêtes longitudinales à une distance (h) au-dessus du plancher du plateau de chargement (3), permettant de glisser les bords (11) des blocs de fond (10) des réservoirs (1),

b) des profils de bord (9) contigus au plancher contre les côtés longitudinaux du plancher du plateau de chargement (3) et

c) des parois latérales appelées ridelles (8) pouvant pivoter vers le haut, comportant des profils longitudinaux (17) faisant saillie, qui, en position verticale des ridelles (8), recouvrent comme une presse les bords (11) des réservoirs (1).

2. Véhicule selon la revendication 1, caractérisé par au moins une barre de blocage (18) visant à garantir contre un glissement dans la direction de marche (A) et qui peut être fixée transversalement par rapport à celle-ci derrière le ou les réservoirs (1).

3. Véhicule selon la revendication 1, caractérisé en ce que le profil en T (12) est placé en position centrale, c'est-à-dire à égale distance des deux côtés longitudinaux du plateau de chargement (2).

4. Véhicule selon l'une au moins des revendications 1 à 3, caractérisé par un profil métallique d'une seule pièce, de préférence un fer profilé en T (12).

5. Véhicule selon l'une au moins des revendications 1 à 3, caractérisé par un profil métallique d'une seule pièce, de préférence un fer profilé en double T (12).

6. Véhicule selon l'une au moins des revendications 1 à 3, caractérisé en ce que le profil en T (12) est formé de deux profils en U (13) en métal ou en fer reliés entre eux.

7. Véhicule selon la revendication 6, caractérisé en ce que les profils en U (13) sont soudés l'un à l'autre par leurs traverses médianes (14).

8. Véhicule selon la revendication 6, caractérisé en ce que les profils en U (13), comportant des traverses médianes (14) tournées l'une vers l'autre sont reliés entre eux à la manière d'une échelle par des entretoises (15).

9. Véhicule selon l'une au moins des revendications 1 à 8, caractérisé en ce que le profil en T (12) pénètre dans le plancher du plateau de chargement (3).

10. Véhicule selon l'une au moins des revendications 1 à 8, caractérisé en ce que le profil en T (12) est incorporé dans le plancher du plateau de chargement (3).

11. Véhicule selon la revendication 1, caractérisé en ce que les profils de bord (9) sont mis en place sur le châssis extérieur du véhicule.

12. Véhicule selon la revendication 1, caractérisé en ce que les profils de bord (9) sont formés d'une arête usinée et s'étendent aussi le long des bords à l'avant et à l'arrière du plancher du plateau de chargement (3).

13. Véhicule selon la revendication 1, caractérisé en ce que les profils longitudinaux (17a, 17b) sur les ridelles (8, 8a, 8b) sont des cornières.

14. Véhicule selon la revendication 1, caractérisé en ce que les profils longitudinaux (17d) présentent un profil de caisson.

15. Véhicule selon la revendication 1, caractérisé en ce que les profils longitudinaux (17c) présentent un profil triangulaire.

16. Véhicule selon l'une au moins des revendications 1 à 15, caractérisé en ce que les ridelles (8) sont partagées en plusieurs tronçons dans le sens longitudinal, en fonction de préférence du quadrillage des dimensions à attendre des réservoirs.

17. Véhicule selon l'une au moins des revendications 1 à 16, caractérisé en ce que les ridelles (8) ou tronçons de ridelles forment avec les profilés longitudinaux (17) une seule pièce d'un profilé étiré.

18. Véhicule selon la revendication 2, caractérisé en ce que la barre de blocage (18) peut être fixée d'un côté au profil en T (12) et de l'autre au châssis du véhicule.

19. Véhicule selon la revendication 18, caractérisé en ce que la barre de blocage (18) peut être bloquée au moyen du profil longitudinal (17) de la ridelle.

20. Véhicule selon la revendication 18, caractérisé en ce que le profil en T (12) présente dans la traverse (16) des évidements (22) pour une cheville de sécurité (21) de la barre de blocage (18).

21. Véhicule selon la revendication 18, caractérisé en ce que la traverse (16) du profil en T (12) présente des évidements (22b) pour un couvre-joint de fixation (24) de la barre de blocage (18).

22. Véhicule selon la revendication 18, caractérisé en ce que la barre de blocage (18) présente des évidements pour le passage d'une cheville de sécurite (21).

23. Véhicule selon la revendication 18, caractérisé en ce que la cheville de sécurité (21) est fixe sur la barre de blocage (18).

24. Véhicule selon la revendication 21, caractérisé en ce que le couvre-joint de fixation (24) est fixe sur la barre de blocage (18).

25. Véhicule selon la revendication 18, caractérisé en ce que la barre de blocage (18) présente frontalement une fente (27) pour y glisser la traverse (16) du profil en T (12).

26. Véhicule selon la revendication 18, caractérisé en ce que son châssis présente dans la zone des bords externes des évidements servant à y enfoncer une cheville de sécurité (29, 30) pour la barre de blocage (18).

27. Véhicule selon la revendication 26, caractérisé en ce que la cheville de sécurité (30) est fixe sur la barre de blocage (18).

28. Véhicule selon la revendication 18, caractérisé en ce que le profil longitudinal (17) de la ridelle loge la partie supérieure de la cheville de sécurité (30).

29. Véhicule selon la revendication 26, caractérisé en ce que la cheville de sécurité (29) sur la barre de blocage (18f) a la forme d'un étrier et que sa branche médiane sert d'appui pour le profil longitudinal (17), sa branche allongée venant en prise dans le châssis du véhicule.

30. Véhicule selon l'une au moins des revendications 26 à 29, caractérisé en ce que l'on peut poser le profil longitudinal (17) de la ridelle sur la cheville de sécurité (29).

31. Véhicule selon la revendication 18, caractérisé en ce que la barre de blocage (18e) forme à son extrémité externe un angle avec une de ses branches, dont la hauteur correspond à celle au-dessus du plancher (3), du profil longitudinal (17) de la ridelle en position verticale et qu'il est prévu à l'extrémité de cette branche une ouverture pour la mise en place sur le talon (9') du profil de bord.

32. Véhicule selon l'une au moins des revendications 1 à 31, caractérisé en ce que le plancher du plateau de chargement (3) porte dans la direction de marche des entretoises transversales (31) pour garantir contre le glissement.

33. Véhicule selon l'une au moins des revendications 1 à 32, caractérisé en ce que, sur le châssis du véhicule, des éléments complémentaires de fixation fixes ou amovibles sont ou peuvent être mis en place en vue de la fixation d'un réservoir (1) seul.

34. Véhicule selon la revendication 1, caractérisé en ce que le profil en T (12) et/ou les profils longitudinaux (17) des ridelles présentent des évidements (32) pour les réservoirs (1) pourvus de jambes de force.

35. Véhicule selon la revendication 1, caractérisé en ce que le plancher du plateau de chargement (3) comportant des bords latéraux (9) ainsi que des bords à l'avant et à l'arrière est configuré en forme de cuve et en ce que, dans le plancher du plateau de chargement est prévu un système d'évacuation comportant des récipients collecteurs en cas de fuites ou de lavages.

36. Véhicule selon la revendication 35, caractérisé en ce que les ridelles latérales (8) ainsi qu'un éventuel hayon sont, à l'état fermé, rendus, grâce à des joints, étanches aux liquides par rapport au plancher du plateau du véhicule et à ses éléments de bord.

37. Véhicule selon les revendications 35 et 36, caractérisé en ce que le plancher (3) possède un système d'évacuation des liquides à partir d'une ou de plusieurs gouttières ou descentes ou ouvertures, auxquelles se raccordent des canalisations d'évacuation des liquides.

38. Véhicule selon la revendication 37, caractérisé en ce que les canalisations débouchent dans un ou plusieurs récipients placés au-dessous du plateau du véhicule.

39. Véhicule selon la revendication 38, caractérisé en ce que les récipients présentent des dispositifs de vidange tels que des tubulures de décharge ou d'aspiration.

FIG.1

FIG. 2

FIG. 3

FIG. 4

FIG. 5

FIG. 28

FIG. 29

FIG.6

FIG.7

FIG.8

17'a
20
17a
8a

FIG.9

17c
8c

FIG.11

17b
8b

17'b

FIG.10

8d

17d
8d

FIG.12

FIG.12a

FIG.13

FIG.17

FIG.14

FIG.18

FIG.15

FIG.19

FIG.16

FIG.20

FIG. 21

FIG.22

FIG. 23

FIG.24

FIG. 25

FIG.26

FIG. 27